(19) Europäisches Patentamt / European Patent Office / Office européen des brevets

(11) **EP 3 350 900 B1**

(12) **FASCICULE DE BREVET EUROPEEN**

(45) Date de publication et mention de la délivrance du brevet:
**23.10.2019 Bulletin 2019/43**

(21) Numéro de dépôt: **16778429.7**

(22) Date de dépôt: **07.09.2016**

(51) Int Cl.:
**H02J 7/00** (2006.01)

(86) Numéro de dépôt international:
**PCT/FR2016/000134**

(87) Numéro de publication internationale:
**WO 2017/046458 (23.03.2017 Gazette 2017/12)**

(54) **SYSTÈME ET PROCÉDÉ POUR RECHARGER DES APPAREILS ÉLECTRONIQUES NOMADES, ET ADAPTATEUR POUR UN TEL SYSTÈME**

SYSTEM UND VERFAHREN ZUM WIEDERAUFLADEN VON ORTSUNGEBUNDENEN ELEKTRONISCHEN VORRICHTUNGEN UND ADAPTER FÜR EIN DERARTIGES SYSTEM

SYSTEM AND METHOD FOR RECHARGING NOMADIC ELECTRONIC DEVICES, AND ADAPTER FOR SUCH A SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.09.2015 FR 1558555**

(43) Date de publication de la demande:
**25.07.2018 Bulletin 2018/30**

(73) Titulaire: **Energysquare SAS**
**75013 Paris (FR)**

(72) Inventeurs:
• **LOLLO Daniel**
  **75013 Paris (FR)**
• **LE QUESNE Timothée**
  **78000 Versailles (FR)**
• **ROUGON Gilles**
  **77250 Veneux les Sablons (FR)**
• **KANE Rokhaya**
  **Dakar Sénégal (FR)**
• **POIDATZ Matthieu**
  **92150 Suresnes (FR)**

(74) Mandataire: **Bell, Mark**
**Marks & Clerk France**
**Immeuble «Visium»**
**22, avenue Aristide Briand**
**94117 Arcueil Cedex (FR)**

(56) Documents cités:
**WO-A2-2005/060401     US-A1- 2010 022 285**

EP 3 350 900 B1

**Description**

DOMAINE DE L'INVENTION

La présente invention est relative aux systèmes permettant de recharger des appareils électriques ou électroniques nomades. Elle concerne en particulier un système et un procédé de recharge qui conviennent à une grande variété d'appareils pourvus de moyens d'alimentation autonome, notamment les portables téléphoniques. L'invention se rapporte également à un adaptateur pour équiper de tels appareils et faciliter la recharge.

ARRIERE-PLAN TECHNOLOGIQUE DE L'INVENTION

Les solutions actuelles de recharge électrique ne sont pas toujours efficaces et présentent souvent des inconvénients. Pour ce qui concerne les chargeurs classiques généralement fournis avec l'appareil à recharger, le procédé de charge est certes rapide et efficace. Cependant, il n'est pas systématique de transporter ce type de chargeur sur soi. Aussi, leur utilisation se cantonne principalement au domicile privé.

Plusieurs autres technologies répondent au besoin de recharger des appareils nomades, mais en l'absence d'un chargeur dédié, on ne trouve pas en pratique de système simple (et intuitif) d'utilisation et compatible avec une large variété d'appareils.

On peut ainsi mentionner la catégorie des batteries portatives pouvant être branchées à un appareil électrique pour le recharger généralement hors du domicile. Ces batteries ont pour avantage de fournir un dispositif de recharge disponible partout mais aussi l'inconvénient de rajouter des contraintes pour l'utilisateur: en plus de devoir charger son téléphone (ou autre appareil nomade), celui-ci devra également penser à charger son dispositif à batteries portatives, et à l'emporter constamment avec lui.

Il existe par ailleurs des bornes de recharge publiques, en général des prises électriques brutes, des prises USB brutes ou des câbles de recharge apparents disponibles dans des lieux de passage tels que les aéroports, gares, bibliothèques, lieux de restauration rapide. Le but de ces installations est de fournir de l'énergie aux utilisateurs présents dans ces lieux. Ces bornes de recharge publiques ont pour inconvénient de ne pouvoir recharger qu'un seul appareil par borne, limitant ainsi le nombre d'appareils total pouvant être rechargé.

La recharge par induction permet de recharger des appareils mobiles de façon intuitive, l'utilisateur n'ayant besoin que de poser son appareil sur un socle de recharge pour le recharger, sans passer par une connectique filaire. Cependant, la recharge par induction a pour inconvénient de ne pouvoir recharger qu'un appareil par bobine, en faisant un dispositif coûteux et difficilement utilisable pour recharger un nombre important d'appareils dans un espace défini. De plus, l'efficacité de ces recharges n'est pas optimale en raison des pertes causées par l'induction. A noter également que le côté pratique de cette technologie est fortement impacté par le fait que l'utilisateur est contraint de poser son téléphone à l'endroit exact où se situent la ou les bobines d'inductions. Il est donc souvent nécessaire en pratique d'ajouter un mécanisme de rétention mécanique qui guide en position l'appareil. Ceci limite la variété d'appareils pouvant être rechargés de cette façon.

WO/2005/060401 décrit un plot de transfert d'énergie comportant : une carte non conductrice ayant une face supérieure et une face inférieure ; une pluralité de sections de substrat conductrices disposées à travers la face supérieure de la carte non conductrice ; au moins un élément conducteur disposé sur chacune des sections de substrat conductrices ; une pluralité de contacts électriques sur la face inférieure de la carte non conductrice, chacun des contacts électriques sur la face inférieure de la carte non conductrice étant en liaison électrique avec une des sections de substrat conductrices sur la face supérieure de la carte non conductrice. Dans ce contexte, il convient également de mentionner le document US 2010/022285 A1.

On connaît, par le document US 7392068 B2 (également publié sous la référence WO 03075415 A1), un système de distribution d'électricité qui permet une recharge électrique par conduction tout en autorisant un degré de liberté de déplacement de l'appareil. Pour cela, le système présente une surface de recharge sensiblement plane qui présente une pluralité de zones de contact permettant de s'adapter à une multitude de positions des bornes d'entrée réceptrices placées dans une face du dessous de l'appareil.

Les bornes d'entrée font partie d'un adaptateur propre à l'appareil et qui doit être configuré pour communiquer des informations d'identification à une unité de contrôle du système de distribution d'électricité. Il faut constater que ce type d'adaptateur est très spécifique et ne peut pas coopérer avec une grande variété d'appareils électriques ou électroniques. De plus, le processus d'authentification de l'adaptateur est complexe et rend ce type de solution peu adapté dans des lieux de passage. Pour recharger plusieurs appareils de gamme différente, il faut en outre pouvoir modifier les paramètres du courant délivré par chacune des zones de contact, ce qui ajoute un surcoût au système.

OBJETS DE L'INVENTION

La présente invention a pour but de pallier un ou plusieurs des inconvénients susmentionnés en proposant un système de distribution d'électricité à forte compatibilité permettant de recharger, successivement ou simultanément, une très large variété d'appareils électriques ou électroniques nomades, par exemple des téléphones portables de dernière génération, des appareils de positionnement GPS, autres appareils similaires de communication, d'enregistrement audio/vidéo ou de reproduction sonore et/ou visuelle, et qui nécessite un minimum d'effort de la part de l'utilisateur pour obtenir une recharge efficace, par conduction directe.

A cet effet, l'invention concerne un système de distribution d'électricité pour permettre de recharger et/ou alimenter, successivement ou simultanément, des appareils électriques ou électroniques nomades pourvus de moyens d'alimentation autonome, le système comprenant :

- un dispositif de support qui présente une surface de recharge sensiblement plane définie essentiellement par :

   o une pluralité de zones de contact conductrices distribuées selon deux directions en formant des rangées adjacentes,
   o et des espacements d'isolation entre les zones de contact,

- un module de contrôle pour alimenter sélectivement les zones de contact en courant (de sorte que les zones de contact sont soit dans un état fonctionnel, soit dans un état inactif) ; et
- au moins un adaptateur à deux bornes d'entrée électriquement conductrices formant deux portions de surface espacées entre elles d'une distance prédéterminée et adaptées pour coopérer par contact direct de conduction avec deux zones de contact de la surface de recharge ; l'adaptateur comprenant un bandeau qui incorpore les deux bornes d'entrée et qui présente :

   - une face externe sensiblement plane comprenant ou définissant un revêtement électriquement isolant, les deux portions de surface formant partie de la face externe, la face externe étant dimensionnée et configurée pour que la distance prédéterminée soit au moins trois fois plus grande que la plus grande extension de n'importe laquelle des deux portions de surface ;
   - une face interne opposée à la face externe et adaptée pour venir s'attacher contre une face d'un appareil électrique ou électronique nomade ; et
   - une partie coudée décalée par rapport à la face interne et reliée électriquement aux deux portions de surface .

Grâce à ces dispositions, il est permis de simplement poser sur la surface de recharge une face principale (il s'agit par exemple d'une face dorsale à l'opposé d'un écran d'affichage lorsque l'appareil est un téléphone portable ou une tablette) d'un appareil préalablement équipé de l'adaptateur. Par rapport à la recharge par induction, le système est plus efficace (conduction électrique) et la petite taille des deux bornes d'entrée de l'adaptateur par rapport à leur écartement permet plusieurs positionnements sur des zones de contact typiquement larges (contrairement à la recharge par induction, où l'appareil doit être posé au-dessus de l'emplacement des bobines).

La section utile des bornes d'entrée peut être avantageusement du même ordre de grandeur que les espacements d'isolation entre deux zones de contact adjacentes (mais en étant typiquement plus petite) et la distance prédéterminée dépasse significativement l'extension maximale d'une zone de contact, de façon à éviter de former un court -circuit par inadvertance.

Le bandeau peut être compatible avec n'importe quel appareil, avec seulement le cas échéant le besoin pour l'adaptateur d'inclure un organe connecteur spécifique de faible encombrement du côté de la partie coudée. En pratique, le bandeau peut être simplement prolongé par un organe connecteur universel ayant une fiche mâle micro USB ou USB (Universal Sériai Bus) . Les fils ou éléments de connectique d'une telle fiche mâle ("VBUS" et "GND") sont reliés aux fils ou bandes conductrices d'électricité, internes au bandeau, qui s'étendent jusqu'aux deux bornes d'entrée.

On notera ici que le port de recharge de type « USB-C » peut évidemment former le port dans lequel l'organe connecteur de l'adaptateur peut s'insérer. Le port USB-C a été développé et officiellement adopté par le groupement USB- IF (« USB Implementers Forum ») qui compte plus de 700 sociétés (incluant notamment Apple, Dell, HP, Intel, Microsoft et Samsung), ce qui laisse présager une large adoption par le marché des appareils électroniques. Plus généralement, on peut considérer que le bandeau présente un caractère universel et il suffit de l'associer de façon adéquate au micro-connecteur (dont l'encombrement est typiquement au moins dix fois plus faible qu'un chargeur classique) qui s'insère dans le port de l'appareil à recharger.

Selon une particularité, la face interne est au moins en partie adhésive et forme une surface d'attache plane, de sorte que le bandeau forme un sticker qui s'étend suivant une direction longitudinale entre la partie coudée et une extrémité distale. Ainsi, on peut conserver l'adaptateur avec l'appareil (l'adaptateur embarqué ayant un encombrement additionnel négligeable), et le cas échéant décoller le sticker lorsque l'on souhaite utiliser l'appareil sans l'adaptateur.

Selon une particularité, le bandeau de l'adaptateur est fixé de façon amovible à un organe connecteur. Ceci permet de laisser le bandeau (par exemple sous la forme d'un sticker) accolé à l'appareil, tout en libérant le port de recharge de l'appareil. Plus généralement, on comprend que l'adaptateur peut être adapté pour permettre une recharge de l'appareil par un chargeur classique sans qu'il soit nécessaire de détacher complètement l'adaptateur ou déplacer le bandeau de l'adaptateur.

Selon une particularité, la partie coudée du bandeau présente des moyens d'attache pour fixer de manière amovible le bandeau à l'organe connecteur, sélectivement selon une première configuration ou une deuxième configuration distincte de la première configuration, de sorte que la position relative du bandeau par rapport à l'organe connecteur peut être modifiée sans bouger l'organe connecteur dans un état connecté à un appareil à recharger. Selon une particularité, le contact entre l'organe connecteur et le bandeau (typiquement la partie coudée du bandeau) peut se faire par aimantation, de préférence avec la possibilité de détacher le bandeau en exerçant une force supérieure à la force d'attraction magnétique. Des petits aimants peuvent ainsi être placés dans un boîtier constitutif de l'organe connecteur. Ils attirent une portion ferromagnétique de la partie coudée, créant ainsi un contact entre les deux parties de l'adaptateur et un passage du courant. Ce type de fixation amovible est avantageux en ce qu'il permet de modifier la position relative de l'organe connecteur par rapport à la partie coudée (coude dans un sens ou dans l'autre, en fonction de la face que l'on souhaite recouvrir par le bandeau, sachant que les prises de recharge micro USB par exemple ne sont pas toujours orientées dans le même sens sur les appareils).

Selon une particularité, le système comprend un groupe de plusieurs adaptateurs pourvus chacun d'un bandeau correspondant (bandeau identique ou se différenciant essentiellement par ses dimensions), de sorte que le système est adapté pour recharger simultanément plusieurs appareils électriques ou électroniques nomades équipés d'un adaptateur respectif dudit groupe. On comprend que la surface de recharge, qui peut présenter une pluralité de rangées de zones de contact, permet à elle seule de recharger simultanément au moins deux appareils (par exemple un téléphone portable et un lecteur de musique), chacun équipés d'un adaptateur du groupe d'adaptateurs.

Dans divers modes de réalisation du système de distribution d'électricité selon l'invention, on peut éventuellement avoir recours en outre à une ou plusieurs des dispositions suivantes :

- l'adaptateur comprend un organe connecteur pourvu d'une partie insérable de connexion amovible formant une première extrémité de l'organe connecteur et d'une tête (par exemple sous forme d'un boîtier) qui forme une deuxième extrémité de l'organe connecteur opposée à la partie insérable ;
- la tête de l'organe connecteur présente une face d'extrémité dite arrière de connexion électrique avec le bandeau et une face latérale formant un support pour une fixation (par exemple adhésive) de la partie coudée ;
- la partie coudée comprend une surface de connexion permettant de relier électriquement la tête de l'organe connecteur au bandeau ;
- le bandeau est allongé et présente une longueur au moins deux fois supérieure à sa plus grande largeur (avec par exemple une largeur maximale comprise entre 9 et 45 mm, de préférence entre 10 et 35 mm) ;
- le bandeau présente au moins deux lignes de pliage parallèles, s'étendant perpendiculairement à une direction longitudinale d'allongement du bandeau et permettant d'éloigner longitudinalement et radialement la surface de connexion par rapport à la surface d'attache plane ;
- la partie coudée du bandeau comprend une ligne de pliage pour définir une extrémité de bandeau qui dévie du reste du bandeau et s'étend, dans une configuration de recharge, selon une orientation opposée à la surface de recharge (cette extrémité s'étendant depuis la ligne de pliage jusqu'à une paire de bornes de sortie) ;
- les bornes de sortie font partie d'une surface de connexion, sensiblement plane, qui définit avec la face interne d'attache un angle prédéterminé inférieur à 120°, de préférence de l'ordre de 90° ;
- l'adaptateur comprend un connecteur déterminé directement connecté aux bornes de sortie, de préférence de manière permanente, le connecteur déterminé étant complémentaire d'un port de connexion, en particulier de type micro USB ou USB, pour permettre la recharge d'un appareil électrique ou électronique nomade (l'organe connecteur peut au besoin correspondre à la technologie visée ; ainsi il peut correspondre à la technologie « Lightning® » de la marque Apple® pour coopérer avec des appareils de cette marque) ;
- la partie coudée du bandeau recouvre partiellement la tête, de préférence du côté de la deuxième extrémité ;
- les zones de contact d'une rangée déterminée choisie parmi lesdites rangées présentent chacune un même périmètre;
- le périmètre des zones de contact, au moins dans la rangée déterminée, est supérieur à une longueur d'un ensemble formé par trois zones de contact successives qui appartiennent à la rangée déterminée ;
- la distance prédéterminée a une longueur dépassant le quart dudit périmètre et de préférence est suffisamment grande pour que les deux bornes d'entrée ne puissent pas être localisées sur une même zone de contact de la surface de recharge ;
- la distance prédéterminée est inférieure à la moitié dudit périmètre et peut être optionnellement supérieure à 40 mm, de préférence supérieure ou égale à 55 mm (ainsi le périmètre peut être typiquement très supérieur à 80 mm, de préférence supérieur ou égal à 110 mm et optionnellement chaque zone de contact a une forme régulière et/ou sans dimension plus étroite qu'une autre ; lorsqu'il y a une distinction visuelle entre les zones isolantes et les zones de contact de la surface de recharge, la grande taille d'une zone de contact par rapport au bandeau permet à l'utilisateur d'identifier plus aisément quelles zones de contact sont effectivement utilisées pour une recharge et quelles zones de contact restent disponibles pour un autre appareil à recharger) ;
- dans plusieurs des rangées, les zones de contact ont un même format sensiblement carré ou hexagonal, avec un même côté, de façon à définir chacune une même surface ;

- les deux portions de surface conductrices, qui sont de préférence de même forme externe et de mêmes dimensions, sont chacune plus petite et d'un autre ordre de grandeur que la surface définie par les zones de contact (par ordre de grandeur différent, il faut bien entendu comprendre une variation d'un rapport d'environ 10 ou plus : par exemple la portion de surface peut être de seulement 0,5 cm$^2$ alors que la zone de contact sur laquelle elle prend appui peut être supérieure à 5 cm$^2$) ;

- le format des zones de contact est carré dans au moins une des rangées et la distance prédéterminée qui sépare les deux bornes d'entrée satisfait de préférence la relation suivante par rapport au côté des zones de contact :

$$1,42 \leq c/a \leq 2,10$$

où a représente le côté d'une zone de contact,
et c représente la distance prédéterminée ;

- les zones de contact sont agencées en quinconce et/ou comprennent au moins deux types distincts de format ;

- la distance prédéterminée est au moins quatre ou cinq fois plus grande que la plus grande extension de n' importe laquelle des deux portions de surface ;

- la dimension caractéristique externe des zones de contact est au moins cinq fois supérieure à la distance de séparation entre deux zones de contact adjacentes, de préférence au moins neuf fois supérieure à cette distance de séparation ;

- la dimension caractéristique externe est par exemple au moins égale à 40 mm et la surface de recharge est dimensionnée pour définir au moins quatre rangées parallèles (exemple non limitatif) ayant chacune au moins deux zones de contact dans un état d'utilisation active, ce grâce à quoi la surface de recharge peut coopérer simultanément avec un nombre d'adaptateurs au moins égal à quatre qui sont séparément associés à des paires de zones de contact, chacun de ces adaptateurs supportant et transférant le courant de recharge à un appareil pourvu d'un port de recharge ;

- le module de contrôle comprend des moyens de détection pour tester un état d'utilisation de chacune des zones de contact .

Il est également proposé un adaptateur pour appareils électriques ou électroniques nomades, pourvu de deux bornes d'entrée électriquement conductrices formant deux portions de surface espacées entre elles d'une distance prédéterminée et adaptées pour coopérer par contact direct de conduction avec une surface de recharge, qui définit ledit adaptateur du système de distribution d'électricité selon l'invention, en comprenant un bandeau qui inclut les deux bornes d'entrée et qui présente :

- une face externe sensiblement plane comprenant ou définissant un revêtement électriquement isolant, les deux portions de surface formant partie de la face externe, la face externe étant dimensionnée et configurée pour que la distance prédéterminée soit au moins trois fois plus grande que la plus grande extension de n'importe laquelle des deux portions de surface ;

- une face interne opposée à la face externe et adaptée pour venir s'attacher contre une face d'un appareil électrique ou électronique nomade, de préférence à l'opposé d'un écran d'affichage ; et

- une partie coudée décalée par rapport à la face interne et reliée électriquement aux deux portions de surface .

Un tel adaptateur facilite le positionnement correct de l'appareil sur une large surface de recharge pouvant typiquement être utilisée pour recharger plusieurs appareils simultanément. Les téléphones de dernière génération (« smartphones ») et les tablettes ont généralement besoin de se brancher à des ordinateurs, et pour cela lë standard presque unique est USB, ce qui correspond à une tension de 5V. Ainsi tous les appareils de ce genre sont munis d'une interface qui correspond à la norme USB en entrée (5.25 V à 4.75 V) et qui abaisse cette tension pour correspondre à celle de la batterie interne (généralement 3 ou 4 V) . Tous ces appareils (quelle que soit la marque) fonctionnent en 5V en entrée, de sorte qu'un adaptateur comme ci-dessus défini peut convenir pour la recharge par conduction directe de courant d'une large variété d'appareils électriques ou électroniques.

Bien entendu, l'adaptateur peut être capable le cas échéant de fonctionner pour un voltage de charge différent des valeurs susmentionnées. Optionnellement, un convertisseur de tension de type DC/DC peut être installé dans l'adaptateur. Egalement, pour un autre usage, la tension nominale fournie par la surface de recharge peut être adaptée (les zones de contact peuvent aussi fournir différentes tensions suivant l'appareil). A titre d'alternative à la technologie USB, on peut mentionner la technologie « Lightning® » utilisée pour des appareils commercialisés sous la marque Apple®.

Grâce à la partie coudée, les éléments de connectique en sortie du bandeau sont particulièrement bien orientés pour permettre le branchement sur l'interface de l'appareil. En outre, du fait de l'attache contre la face dorsale au plus près du port de recharge, il n'y a pas de fils libres ou parties libres de connectique similaires pouvant s'intercaler sous l'appareil posé sur la surface de recharge et qui risquent d'empêcher l'obtention d'une conduction efficace vers la borne d'entrée la plus proche du port de recharge

Selon une particularité, l'adaptateur comprend un organe connecteur à tête rigide et qui présente une partie insérable de connexion amovible distincte de ladite tête (typiquement de type USB ou micro USB, sans que ce soit limitatif), la partie coudée étant raccordée à la tête de l'organe connecteur et présentant une portion d'ajustement en position délimitée entre une première ligne de pliage du bandeau proximale par rapport à l'organe connecteur et une deuxième ligne de pliage du bandeau distale par rapport à l'organe connecteur. Avec ce type d'ajustement, les éléments de connectique de sortie sont bien orientés, indépendamment des petites variations de distance pouvant exister, d'un appareil à l'autre, entre l'interface située sur la tranche et la face (généralement une face dorsale) sur laquelle la face interne du bandeau est accolée.

Un autre objet de l'invention est de proposer un procédé de recharge électrique qui associe efficacité et facilité d'utilisation avec une large gamme d'appareils.

A cet effet, il est proposé un procédé de distribution d'électricité pour recharger, successivement ou simultanément, plusieurs appareils électriques ou électroniques nomades pourvus de moyens d'alimentation autonome, en utilisant une surface de recharge sensiblement plane qui présente une pluralité de zones de contact conductrices distribuées selon deux directions en formant des rangées adjacentes, le procédé comprenant pour chaque appareil à recharger les étapes consistant essentiellement à :

- connecter un adaptateur à un port de recharge de l'appareil par l'intermédiaire d'un organe connecteur à connexion amovible, de préférence du côté d'une tranche de l'appareil, l'adaptateur comprenant un bandeau qui prolonge l'organe connecteur et qui est pourvu sur une face externe de deux bornes d'entrée électriquement conductrices formant deux portions de surface ;
- accoler et attacher, dans une zone d'attache, une face interne du bandeau opposée à la face externe contre une face de l'appareil, en maintenant l'organe connecteur écarté de la zone d'attache et dans un état de liaison électrique à une partie du bandeau qui est coudée ;
- placer l'adaptateur entre l'appareil et la surface de recharge en mettant en contact direct de conduction les deux portions de surface sur des zones de contact distinctes de la surface de recharge, sachant que les deux portions de surface sont espacées entre elles d'une distance prédéterminée au moins trois fois plus grande que la plus grande extension de n'importe laquelle des deux portions de surface ; et
- alimenter sélectivement des zones de contact en courant, de sorte que les deux zones de contact sur lesquelles s'appuient les deux portions de surface sont dans un état fonctionnel et permettent la recharge via l'adaptateur.

Selon une particularité, chacune des zones de contact est alimentée par une même tension comprise entre environ 4 V et environ 5,25 V, par exemple entre 4,75 V et 5,25 V, l'organe connecteur à connexion amovible étant par exemple de type USB ou micro-USB.

Avantageusement, il n'y a pas besoin d'orienter spécifiquement le ou les appareils à recharger, une fois ceux-ci équipés de l'adaptateur. Le procédé peut être mis en oeuvre dans plusieurs contextes. Il est ainsi possible d'installer ce système dans tous les lieux où l'utilisateur passe du temps à attendre ou est immobile un certain temps: transports (aéroports, gares..), restaurants, universités, salles d'attente, usines, bureaux. Il est également possible d'installer ce système à domicile.

Pour permettre à des utilisateurs d'accéder à la surface de recharge, il est possible de commercialiser séparément un certain nombre d'adaptateurs (avec la possibilité pour l'utilisateur de conserver l'adaptateur qui forme une languette typiquement repositionnable).

## BREVE DESCRIPTION DES DESSINS

D'autres caractéristiques et avantages de l'invention apparaîtront au cours de la description suivante de plusieurs modes de réalisation, donnés à titre d'exemples non limitatifs, en regard des dessins joints dans lesquels :

- la figure 1 est une vue en perspective d'un adaptateur monté sur un appareil à recharger selon une forme de réalisation conforme à l'invention ;
- la figure 2 illustre schématiquement un système de distribution d'électricité permettant de recharger plusieurs appareils équipés de l'adaptateur pour une variété de positions de ces appareils ;
- la figure 3A est une vue de dessous montrant la face externe du bandeau de l'adaptateur selon une forme de réalisation conforme à l'invention ;
- la figure 3B est une vue de dessus montrant la face interne du bandeau de l'adaptateur illustré sur la figure 3A ;
- la figure 4 est une vue en perspective d'un système de distribution d'électricité en fonctionnement ;
- la figure 5 est un exemple de schéma électrique pouvant être utilisé pour l'alimentation sélective de zones de contact de la surface de recharge ;
- la figure 6 est une vue en perspective d'un organe connecteur qui fait partie de l'adaptateur illustré dans la figure 1 ;
- la figure 7 est une vue en perspective de l'adaptateur illustré dans la figure 1.

## DESCRIPTION DE MODES DE REALISATION DE L'INVENTION

Sur les différentes figures, des références identiques indiquent des éléments identiques ou similaires.

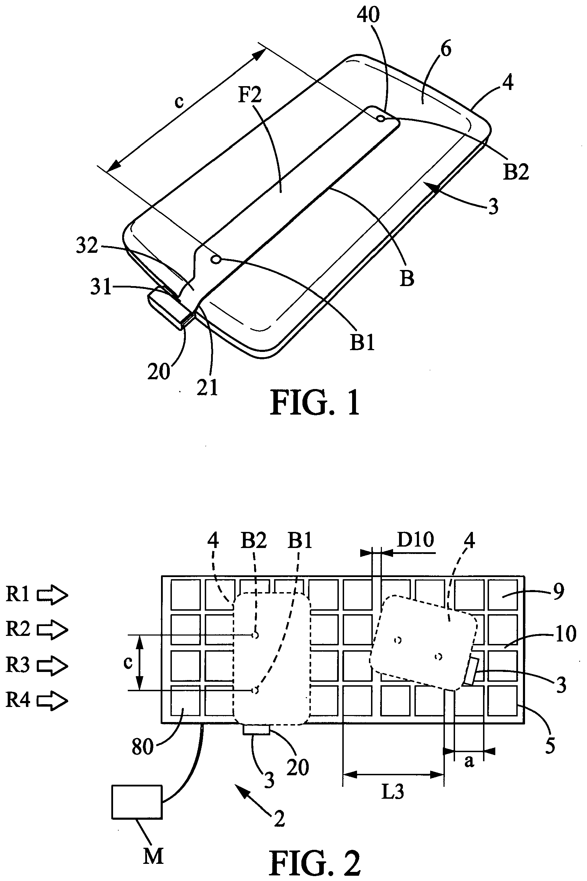

En référence aux figures 1, 2 et 4, le système de distribution d'électricité 1 comporte une partie stationnaire 2 et au moins un adaptateur 3 qui se monte sur un appareil 4 nomade (électrique ou électronique) à recharger. Il n'y a ni connexion filaire entre la partie stationnaire 2 et l'adaptateur 3 ni de partie mâle ou femelle pour réaliser le branchement électrique de l'adaptateur 3 sur la surface de recharge 5 de la partie stationnaire 2. L'adaptateur 3 présente simplement deux bornes d'entrée Bl, B2 électriquement conductrices (par exemple métalliques) qui se situent dans une face externe F2 sensiblement plane d'un bandeau B.

Dans une configuration assemblée de l'adaptateur 3, le bandeau B épouse le relief plan d'une face dorsale 6 de l'appareil 4, de façon à exposer la face externe F2 du côté d'une face principale (typiquement une face parallèle et opposée à un écran d'affichage de l'appareil 4). Dans des variantes, le bandeau B peut se fixer, en complément ou en remplacement, sur les flancs voire sur la face avant (au moins en partie) d'un appareil 4. On comprend que le bandeau B peut, optionnellement, épouser en partie un flanc d'un appareil 4 qui est posé du côté de ce flanc contre la surface de recharge 5.

## Partie stationnaire

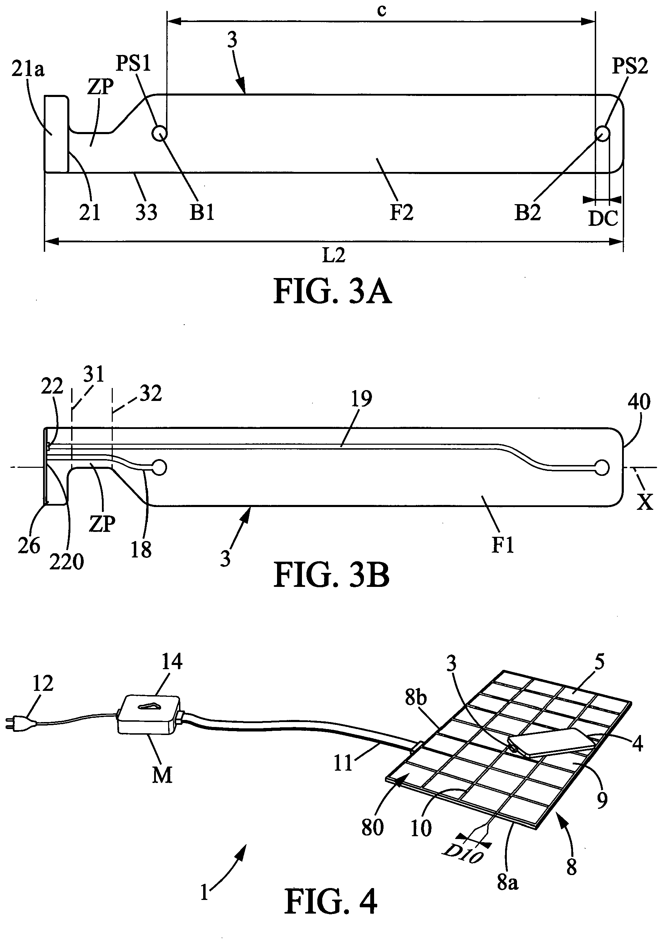

En référence aux figures 2 et 4, la partie stationnaire 2 comporte un module de contrôle M et un dispositif de support 8 qui présente une surface de recharge 5 sensiblement plane et adaptée pour fournir du courant de recharge. Le module de contrôle M est configuré pour alimenter sélectivement en courant les zones de contact 9 réparties sur la surface de recharge 5. Ces zones de contact 9 sont électriquement conductrices et séparées les unes des autres par des espacements d'isolation 10. Les espacements 10 définissent une distance de séparation D10 entre deux zones de contact adjacentes 9.

Les zones de contact 9 sont distribuées selon deux directions en formant des rangées adjacentes RI, R2, R3, R4. Le dispositif de support 8 peut se présenter sous la forme d'une plaque qui comprend un substrat isolant 8a, des éléments découpés 80 qui sont conducteurs et définissent les zones de contact 9, et une connectique filaire 11 permettant à chaque élément découpé 80 d'être relié au module de contrôle M. Dans l'exemple non limitatif des figures 2 et 4, les zones de contact 9 ont une forme correspondant à un carré ou une forme générale de carré ou rectangle. Il est préférable que la distance de séparation D10 soit réduite par rapport au côté a ici défini par les zones de contact 9.

Le dispositif de support 8 peut être découpé suivant la forme voulue. Il permet de distribuer de l'énergie sur une surface donnée qui se décompose typiquement en au moins deux rangées RI, R2, R3, R4 ayant chacune au moins deux, trois ou quatre zones de contact 9. Cet agencement autorise le cas échéant la recharge de plusieurs appareils 4, qui ont simultanément accès à cette énergie. Comme bien visible sur la figure 4, l'énergie peut provenir d'une seule prise électrique 12 en liaison avec le module de contrôle M.

Dans une variante, une seule rangée peut être prévue. Pour une application qui ne vise pas une recharge simultanée d'appareils 4 sur une même surface de recharge 5, on comprend qu'un minimum de deux zones de contact 9 suffit.

A titre d'exemple non limitatif, l'isolant utilisé dans le dispositif de support 8 peut être sélectionné parmi des polymères (et dérivés), ou bois (et dérivés), ou verres (et dérivés), ou autres matériaux isolants électriques. Cet isolant peut être rigide (et de préférence non cassant et résistant aux chocs) afin de conférer une certaine solidité au dispositif de support 8. Lorsque le substrat isolant 8a forme une plaque d'un seul tenant, les éléments découpés 80 peuvent être incrustés ou encastrés dans le substrat isolant 8a. Les éléments découpés 80 ont par exemple une épaisseur de 0.001 mm à 1 mm et forment une zone de contact 9 dont la diagonale (ou plus grande extension équivalente) est typiquement de taille inférieure à la distance $c$ entre les deux bornes d'entrée Bl et B2 de l'adaptateur. Plus généralement, on comprend que les zones de contact 9 formées par les éléments découpés 80 peuvent présenter une diagonale ou extension maximale équivalente suffisamment grande pour limiter la densité de la connectique filaire 11, et par exemple supérieure ou égale à 30 ou 40 mm.

Dans un mode de réalisation préféré, les zones de contact 9 d'une rangée RI, R2, R3 ou R4 présentent chacune un même périmètre qui est supérieur à une longueur L3 d'un ensemble formé par trois zones de contact 9 successives qui appartiennent à cette rangée, ce qui montre que la distance D10 est très inférieure à la diagonale d'une zone de contact 9. La distance prédéterminée c dépasse le quart d'un tel périmètre et, de préférence, est suffisamment grande pour que les deux bornes d'entrée Bl et B2 ne puissent pas être localisées sur une même zone de contact 9 de la surface de recharge 5.

Par ailleurs, il peut être avantageux que chaque zone de contact 9 ait un périmètre supérieur à la distance prédéterminée et typiquement tel que la distance prédéterminée $c$ est inférieure à la moitié dudit périmètre. En pratique pour des zones de contact 9 à forme générale de carré ou d'hexagone et lorsque la longueur totale du bandeau B n'excède pas de beaucoup la distance $c$, cela évite généralement que le bandeau B chevauche plus de quatre zones de contact 9 (alors qu'il suffit que deux zones de contact soient recouvertes par et en contact avec la face externe F2 du bandeau B pour permettre une recharge).

Dans l'exemple illustré, les éléments découpés 80 sont encastrés dans le substrat isolant 8a de telle manière que la surface "isolant + élément conducteurs" est régulière et plane (éléments découpés 80 conducteurs disposés à effleurement de l'isolant). Le matériau des éléments 80 peut être sélectionné parmi des métaux (et dérivés) ou graphite (et dérivés). Lorsque les éléments 80 forment des carrés ou des hexagones, ceux-ci sont disposés sur le substrat isolant 8a à intervalles réguliers. La distance c entre deux zones de contact 9 adjacentes peut être choisie en fonction d'un diamètre DC ou taille caractéristique équivalente des bornes d'entrée BI et B2 de l'adaptateur 3. Ainsi, la distance D10 peut être supérieure au diamètre DC.

Le diamètre DC doit être inférieur à la distance D10 si l'on souhaite qu'une portion de surface PSI ou PS2 ne puisse pas relier deux zones de contact différentes 9. En pratique on peut préférer que la distance D10 soit juste inférieure au diamètre DC (ou dimension équivalente) pour éviter que les portions de surface PSI et PS2 ne se retrouvent au milieu de l'isolant trop souvent.

La connectique filaire 11 présente une gaine commune ou un faisceau de câbles pour la liaison avec le module de contrôle M et présente une pluralité de branches qui se connectent à chacun des éléments 80, de préférence par une face dorsale opposée à la zone de contact 9 correspondante. Chaque fil électrique ou branche (non représenté) est ensuite relié par le dessous du dispositif de support 8 à la même extrémité 8b, puis connecté au module de contrôle M, ici à travers la gaine commune à tous les fils. Cette connectique filaire 11 permet de faire circuler l'information et l'énergie électrique entre les éléments 80 et le module de contrôle M.

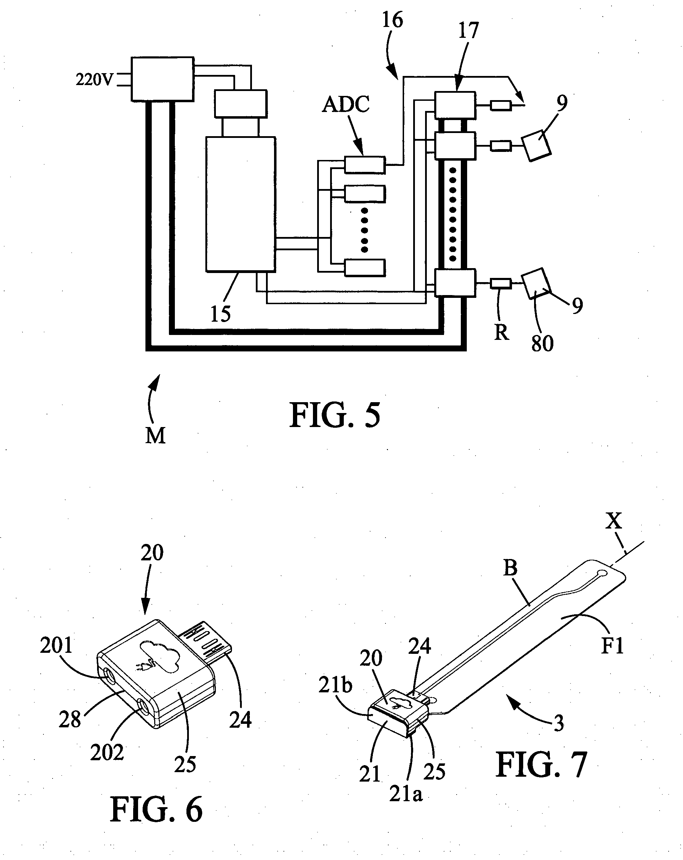

La figure 5 illustre un schéma électrique pouvant être utilisé dans le module de contrôle M, par exemple à l'intérieur du boîtier 14 montré sur la figure 4. Parmi les composants électriques du module de contrôle M, on trouve une unité de traitement 15, par exemple sous la forme d'un processeur ou d'un microcontrôleur, des moyens de détection 16 configurés pour tester sélectivement et périodiquement l'état d'utilisation des zones de contact 9 et un dispositif d'aiguillage 17.

Optionnellement, le dispositif d'aiguillage 17 peut comporter des quadruples demi-ponts HB ( "halfbridges " ) qui permettent chacun de réaliser un pilotage de quatre éléments 80. Des résistances R sont optionnellement prévues entre l'élément 80 et le ou les éléments commutateurs du dispositif d'aiguillage 17. Ainsi l'unité de traitement 15 peut piloter indépendamment chacun des éléments 80 et les faire passer d'un potentiel bas (par exemple 0V) à un potentiel haut (par exemple 5V) . Bien entendu, on peut utiliser tout type d'éléments commutateurs, agencés entre le module de contrôle M et les zones de contact 9, afin de répartir du courant dans ces zones de contact 9 à partir d'une même source d'alimentation électrique en liaison avec le module de contrôle M.

L'unité de traitement 15 peut aussi gérer une liaison de données lui permettant de piloter des convertisseurs ADC (il peut s'agit d'un bus de données avec une communication selon un schéma maître-esclave) servant chacun à mesurer l'intensité débitée par les éléments 80 puis à renvoyer un signal ou une information représentative de cette intensité à l'unité de traitement 15, lorsque demandé. De tels convertisseurs ADC font ici partie des moyens de détection 16. Optionnellement , ces convertisseurs ADC peuvent être intégrés sur un ou plusieurs microcontrôleurs qui font partie de l'unité de traitement 15.

On comprend que l'unité de traitement 15 peut piloter ainsi des éléments testeurs (par exemple sous la forme de convertisseurs ADC) distribués en parallèle et associés chacun à une des zones de contact 9. Les moyens de détection 16 qui incluent de tels éléments testeurs peuvent permettre de successivement déterminer, pour les zones de contact 9 , un état de charge à maintenir et un état prêt à charger, en fonction d'une réponse de chacun des éléments testeurs associés à un même groupe de zones de contact 9.

Dans un exemple de réalisation, l'unité de traitement 15 récupère grâce aux convertisseurs ADC les intensités débitées par chaque élément 80 d'un même groupe. Ici, un groupe se compose d'un ensemble d'élément découpés 80, conducteurs, appartenant au dispositif de support 8 et qui sont suffisamment éloignés pour que quelle que soit la configuration, chaque adaptateur 3 (qui présente la distance prédéterminée c entre les bornes BI et B2) ne puisse être relié à deux éléments 80 du même groupe.

Avant de mesurer une intensité, l'unité de traitement 15 allume (fait passer de 0 à 5V par exemple) simultanément les éléments 80 appartenant au même groupe durant un cours laps de temps permettant de récupérer les mesures d'intensité débitées.

L'unité de traitement 15 va ensuite tester chacune des intensités obtenues et en déduire si elle correspond à une résistance équivalente à celle d'un appareil 4. Ainsi, par un test, on déduit pour ce groupe quels sont les éléments 80 déjà branchés à un appareil 4. Si tel est le cas, la tension haute est maintenue sur l'élément 80 correspondant. Sinon, l'élément 80 est ramené à la tension basse.

Dans une autre version, l'unité de traitement 15 peut être configurée pour allumer chaque élément 80 indépendamment de manière cyclique de fréquence aléatoire mais supérieure à une constante. Les tests sont également faits indépendamment. Ainsi, dans le cas où deux éléments 80 reliés au même adaptateur 3 sont testé en même temps, cela rendrait le test faux-négatif mais la fréquence aléatoire de ces tests permettrait un décalage presque assuré de ces tests au cycle suivant.

Plus généralement, l'unité de traitement 15 peut déduire par un ou plusieurs tests appropriés si une batterie ou moyens autonomes équivalents d'un appareil électrique ou électronique 4 est bien raccordée. Dans le cas illustré, l'unité de traitement 15 laisse alors dans un état fonctionnel toutes les sorties des demi-ponts HB (ou autres éléments d'un dispositif d'aiguillage 17) correspondants aux éléments 80 ayant eu un test positif et éteint les autres.

Sur le schéma de la figure 5, les convertisseurs ADC mesurent l'intensité débitée typiquement à travers la chute de tension en sortie, mais cela pourrait aussi être fait via des capteurs à effet Hall. On comprend que ce type de fonction peut être réalisé de manière différente.

Plus généralement, le module de contrôle M est apte à modifier automatiquement la configuration du dispositif d'aiguillage 17, de façon à :

- stopper l'alimentation en courant pour faire passer dans l'état inactif des zones de contact 9 encore à l'état fonctionnel sans que l'état d'utilisation déterminé par les moyens de détection 16 ne corresponde à l'état de charge à maintenir, et
- alimenter sélectivement en courant les zones de contact 9 jusque-là maintenues dans l'état inactif et pour lesquelles l'état d'utilisation déterminé par les moyens de détection correspond à l'état prêt à charger.

On comprend que le module de contrôle M permet de répartir la bonne quantité d'énergie sur le dispositif de support 8 au bon moment. C'est dans ce module de contrôle M que se trouve l'intelligence du système 1. Comme bien visible sur la figure 4, ce module de contrôle M est connecté au dispositif de support 8 à une extrémité (interface de sortie du module M) et à une prise de courant à l'autre extrémité (entrée d'alimentation électrique).

Dans l'exemple non limitatif représenté, il est permis de maintenir les éléments 80 dans un état inactif et d'allumer l'un de ces éléments 80 seulement pour un très cours instant, de l'ordre de la milliseconde. Le système 1 est donc très performant en veille. En activité, les batteries des appareils 4 sont reliées aux zones de contact 9 formées par les éléments 80 via un contact de conduction électrique, ce qui permet d'avoir des performances très proches du chargeur classique mais avec la possibilité de recharger simultanément une large variété d'appareils 4.

Bien entendu, le mode d'activation des éléments 80 peut évoluer en fonction des besoins. Les moyens de détection 16 peuvent ainsi être configurés autrement, notamment (et de manière non limitative) si le dispositif de support 8 comprend un nombre de zones de contact 9 peu élevé. Une détection sans former des groupes d'éléments 80 peut par exemple être réalisée. Pour cela, il suffit par exemple d'utiliser plusieurs modules (par exemple des processeurs) capables chacun d'assurer indépendamment les tests de chaque élément 80, chacun ayant son propre processus.

Bien que les exemples des figures 2 et 4 montrent des zones de contact 9 de format carré, une forme d'hexagone ou d'autres formes peuvent être utilisées avec le même genre de distribution et la même étroitesse des espacements d'isolation 10. Dans des variantes, les zones de contact 9 sont agencées en quinconce et/ou comprennent au moins deux types distincts de format.

Pour un format sensiblement carré des zones de contact 9, au moins dans l'une des rangées, la distance prédéterminée c qui sépare les deux bornes d'entrée Bl, B2 peut satisfaire la relation suivante par rapport au côté a des zones de contact :

$$1,42 \leq c/a \leq 2,10.$$

En effet, il n'est pas utile en pratique que la distance c, définie par le bandeau B entre les bornes d'entrée Bl et B2, soit trop longue par rapport à une taille caractéristique des zones de contact 9. Il s'agit ici d'un bon compromis puisque cela permet tout de même aux bornes Bl, B2 de ne pas venir en contact avec le même carré de contact.

**Adaptateur**

Tandis que le système de distribution d'électricité 1 peut présenter une variété d'options pour la partie stationnaire 2, il est prévu selon l'invention un adaptateur 3 dont la géométrie est particulièrement adaptée pour équiper un appareil 4 nomade qui dispose d'un port de recharge, par exemple un port de type micro USB ou similaire.

En référence aux figures 1 et 3A-3B, l'adaptateur 3 présente un format allongé de languette ou d'étiquette grâce au bandeau B. Le bandeau B est fin et prolongé longitudinalement par un organe connecteur 20 plus épais. De préférence, le bandeau B est souple et a une épaisseur optionnellement constante qui ne dépasse pas 2 mm (l'épaisseur étant typiquement supérieure à 0,001 mm).

La longueur du bandeau B est typiquement plus courte ou égale à la longueur de l'appareil 4 rechargé. En pratique, au regard des tailles habituelles d'écran (au moins 3 pouces ou 7,62 cm) pour les appareils nomades, le bandeau B a une longueur apparente L2 (visible sur les figures 3A et 3B) qui peut être typiquement comprise entre 50 et 120 mm. La distance prédéterminée c peut ainsi être comprise entre 40 et 100 mm dans des modes de réalisation préférés. Une longueur de bandeau B plus grande peut être prévue, notamment s'il est possible de plier une extrémité du bandeau B .

Le bandeau B peut comporter plusieurs couches, au moins trois couches dans une option préférée. La couche inférieure est ici plane et recouverte d'une matière adhésive (par exemple colle repositionnable d'un genre connu en soi ou éléments à effet de ventouse) permettant de fixer le bandeau B à l'appareil 4. La matière adhésive peut être choisie pour fournir une adhésion amovible et répétable une dizaine de fois sans perte d'adhérence. La couche supérieure du bandeau B définit la face externe F2 et peut permettre d'afficher des informations et le cas échéant un ou plusieurs logos.

La couche inférieure définit la face inférieure F1 qui est optionnellement transparente ou translucide, comme visible sur la figure 3B. La face interne F1 est au moins en partie adhésive et forme une surface d'attache plane, de sorte que le bandeau B forme un sticker qui s'étend suivant une direction longitudinale entre une extrémité distale 40 et une extrémité proximale, coudée et proche du port de recharge dans un état assemblé de l'adaptateur 3 sur l'appareil 4 à recharger. La borne d'entrée B2 est ici proche de l'extrémité distale 40, en étant par exemple située à moins de 20 ou 30 mm, de préférence moins de 12 mm, du bord libre défini par l'extrémité distale 40.

La couche intermédiaire comporte deux bandes ou lignes conductrices d'électricité 18, 19, chacune reliée d'une extrémité à une des bornes d'entrée BI, B2 conductrices de l'adaptateur 3, et à l'autre aux éléments de connectique 22 ("VBUS" et "GND") de l'organe connecteur 20. Ce dernier est ici réalisé sous la forme d'une fiche mâle micro USB si l'appareil 4 est rechargé par micro USB. Les éléments de connectique 22 sont montés dans le bandeau B dans une partie coudée 21 du bandeau B. On peut noter que ces éléments de connectique 22 (définissant la surface de connexion 220) peuvent être situés du côté de la face interne FI, à la différence des bornes d'entrée BI et B2 situées du côté de la face externe F2.

Bien que cet exemple montre un bandeau B qui s'assemble avec l'organe connecteur 21, le cas échéant par une fixation amovible, on peut en variante prévoir que l'organe connecteur 21 soit indissociable du bandeau B et formé d'un seul tenant avec le bandeau B pour définir l'adaptateur 3.

En référence à la figure 6, la partie d'insertion 24 de l'organe connecteur 20 permet une fixation rigide, typiquement sur une tranche de l'appareil 4 (position généralement adoptée dans les appareils électronique qui disposent d'un écran d'affichage et certains autres appareils électriques). L'organe connecteur 20 présente aussi une tête 25, ici délimitée extérieurement par un boîtier, qui forme un support de la partie d'insertion 24, plus fine. L'organe connecteur 20 sert d'intermédiaire de transmission de courant électrique entre l'appareil 4 à recharger et les deux bandes conductrices d'électricité 18, 19 du bandeau B.

Pour s'assurer que le courant est envoyé dans le bon sens, l'adaptateur 3 peut inclure un composant qui n'autorise qu'un seul sens de circulation du courant entre les deux bornes BI, B2, dans l'état fermé du circuit de recharge. Même si les téléphones de dernière génération sont généralement équipés d'un mécanisme de protection d'un genre connu en soi empêchant une connexion qui inverserait la polarité des batteries (l'appareil ne chargerais pas dans un tel cas), ce type de composant tel qu'une diode pour un fonctionnement à sens unique permet de s'assurer du bon sens du courant, de sorte que l'appareil 4 charge à chaque fois même s'il s'agit d'un appareil sans mécanisme de protection. A titre d'exemple, on peut incorporer un tel composant dans l'organe connecteur 20. Par ailleurs, un stabilisateur de tension peut aussi être incorporé, pour s'assurer d'une tension optimale sur tous les appareils 4.

Dans un mode de réalisation, les bandes conductrices 18, 19 sont composées de matériaux métalliques. Les bornes d'entrée BI et B2 sont typiquement dans le même matériau et/ou incluent un revêtement à haute conductivité électrique (le cuivre, l'argent, certains alliages comme argent -cadmium, alliage de cuivre et/ou l'or peuvent ainsi convenir sans que ce soit limitatif).

Les couches inférieures et supérieures sont composées de matériaux souples et non conducteurs, par exemple du papier ou un polymère souple. Ainsi à l'exception des deux bornes d'entrée BI, B2 , la face externe F2 est constituée par un revêtement électriquement isolant. On comprend ainsi que plus de 90 ou 95% de la face externe F2 est constitué d'un revêtement électriquement isolant.

Bien entendu, le système 1 peut comporter une pluralité d'adaptateurs 3, qui de préférence sont identiques. Comme illustré sur les dessins, chaque adaptateur 3 peut présenter un nombre de bornes d'entrée BI, B2 exactement égal à deux et formant deux portions de surface PSI, PS2 espacées entre elles de la distance prédéterminée $c$ et qui font partie de la face externe F2.

Comme bien visible sur la figure 2, la distance prédéterminée $c$ est au moins trois fois plus grande que la plus grande extension de n'importe laquelle des deux portions de surface PSI, PS2 montrées sur la figure 3A. Pour des portions PSI, PS2 de section circulaire ou sensiblement circulaire ayant un diamètre DC, la distance $c$ peut être typiquement d'un ordre de grandeur supérieur (par exemple en étant environ 10 à 100 fois supérieure au diamètre DC ou extension maximale équivalente lorsque les portions PSI, PS2 ne sont pas circulaires). La partie coudée 21 peut comporter une ligne de pliage prédéfinie 26 formée à l'extrémité du bandeau B qui s'assemble rigidement avec l'organe connecteur 20 et une zone de restriction en largeur ZP apte à se déformer et se plier et qui facilite la formation d'une ou deux lignes de pliage 31, 32 additionnelles, comme visible sur les figures 1 et 3B.

La zone de restriction ZP peut ainsi s'étendre transversalement à la direction longitudinale du bandeau B lorsque ce dernier est attaché par sa face interne F1 à une face dorsale plane 6 d'un appareil 4. L'axe central X visible sur la figure 3B peut définir une telle direction longitudinale. De manière nullement limitative, la zone de restriction ZP s'étend ici essentiellement d'un seul côté par rapport à l'axe central X, ce qui permet de former un bord long 33 sensiblement droit. Un tel bord long 33 facilite pour l'utilisateur l'attache de la face interne F1 en suivant la direction longitudinale de l'axe central X, ce qui évite en pratique de créer une torsion de la zone de restriction en largeur ZP.

Le bandeau B montré sur les figures 3A-3B, avant montage sur un appareil 4, peut être plan et c'est la jonction avec la partie coudée 21 qui forme la ligne de pliage prédéfinie 26. Alternativement, au moins une autre ligne de pliage 31 et/ou 32, parallèle à la ligne de pliage 26 peut être formée avant un premier montage sur un appareil 4 à recharger.

La zone ZP qui correspond à un rétrécissement est optionnelle et peut avoir un format différent du cas illustré sur les figures 1 et 3A-3B. Par ailleurs, le nombre de bornes sur le bandeau B peut varier en fonction du besoin. Ainsi, le bandeau B peut disposer de plus que deux bornes de contact BI, B2, par exemple si on veut recharger des ordinateurs portables dont la batterie a une capacité élevée (par exemple avec un nombre bien plus élevé de cellules par comparaison avec une batterie de téléphone).

Pour une recharge d'appareils plus puissants, l'adaptateur 3 peut optionnellement combiner plusieurs bandes ou lignes conductrices 18, 19 dans un même bandeau B ayant de plus grandes dimensions. Dans ce cas, un plus grand nombre de zones de contact 9 alimentent le même bandeau B qui est perçu par le dispositif de support 8 comme représentant plusieurs bandeaux. Ainsi, un adaptateur pourvu d'un bandeau B qui présente plus d'une paire de bornes de contact peut être parfaitement adapté pour permettre de recharger un appareil 4 relativement puissant.

Les bornes de sortie du bandeau B, formées par les éléments de connectique 22, font saillie d'une face interne du bandeau B et sont orientées selon une direction sensiblement perpendiculaire à l'orientation des deux bornes d'entrée BI, B2, de sorte que le bandeau B permet de conserver une configuration plane de la face externe F2 lorsque l'adaptateur 3 est attaché à une face dorsale 6 d'un appareil 4 et raccordé à un port de recharge de ce même appareil 4 par l'organe connecteur 20.

En référence à la figure 7, la tête 25 de l'organe connecteur 20 peut être rigide et est prolongée par une partie insérable 24 de connexion amovible, par exemple de type micro-USB. Les bornes 201, 202 formées dans la tête 25 sont agencées au fond de cavités qui correspondent aux saillies formées par les éléments de connectique 22 dans la partie coudée 21. Cette partie coudée 21, rigide et qui peut inclure une section en L en matériau ferromagnétique, recouvre la face arrière 28 de l'organe connecteur 20.

Le matériau ferromagnétique présent dans la partie coudée 21 complète ici les éléments de connectique 22 pour définir des moyens d'attache qui permettent de détacher le bandeau B. Des aimants peuvent optionnellement être prévus (ici du côté de l'organe connecteur 20), de sorte que le bandeau B est fixé de manière amovible à l'organe connecteur 20. Cette disposition permet aussi de positionner sélectivement le bandeau B sur un côté (selon une première configuration) ou sur autre côté opposée (selon une deuxième configuration). Il est ainsi possible de décrocher le bandeau B pour le retourner et le raccrocher, par exemple par aimantation.

Lorsque la partie coudée 21 forme un L, la section de recouvrement 21b qui recouvre la face arrière 28 est plane, rigide, et perpendiculaire à l'axe central X ou autre direction longitudinale définie par le reste du bandeau B. L'autre section 21a, adjacente à la zone de restriction ZP plus étroite et flexible, peut présenter sensiblement la même largeur que la section de recouvrement 21b et présente de préférence une rigidité similaire ou identique à celle de la section de recouvrement 21b.

La partie coudée 21 est avantageusement raccordée à la tête 25 à l'opposé de la partie insérable 24, ce qui facilite la miniaturisation de la tête 25. Le bandeau B comprend une portion d'ajustement en position qui correspond à la zone de restriction en largeur ZP, cette portion d'ajustement pouvant être délimitée entre la première ligne de pliage 31 du bandeau B qui est proximale par rapport à l'organe connecteur 21 et la deuxième ligne de pliage 32 qui est distale. La portion d'ajustement permet de décaler la partie coudée 21 par rapport à la zone d'attache plane définie par la face interne FI. La dimension longitudinale de la zone ZP définie par la portion d'ajustement peut être de l'ordre de 5 à 15 ou 20 mm (dimension mesurée selon l'axe central X avant pliage).

Bien que les figures montrent un adaptateur 3 seulement connecté à l'appareil 4, on peut en variante raccorder un accessoire à l'adaptateur 3. Ainsi, lorsque l'appareil 4 est équipé de coques interchangeables (ce qui permet une personnalisation), l'adaptateur 3 peut :

- soit recouvrir la coque par sa face interne FI (cas où la face 6 peut être définie par une coque solidaire de l'adaptateur 3),
- soit en partie s'incorporer dans une coque qui complète l'appareil 4 (cas d'une coque qui est amovible avec l'adaptateur 3) .

Plus généralement, il est permis de prolonger le bandeau B et/ou l'organe connecteur 20 pour réaliser des fonctions additionnelles. Au moins une extrémité de l'adaptateur 3, distante de la zone de contact où se situent les bornes BI, B2, peut ainsi comporter un élément complémentaire qui recouvre ou s'étend à proximité d'une autre face de l'appareil 4.

## Installation de l'adaptateur et recharge

En référence aux figures 1 et 6-7, le processus d'installation de l'adaptateur 3 sur l'appareil 4 par l'utilisateur est le suivant : l'utilisateur branche d'abord la partie insérable 24 , ici une fiche mâle micro USB dans l'exemple de la figure 6 (ou autre si l'appareil 4 n'est pas rechargé par micro USB), dans la prise formant le port de recharge de son appareil 4, puis rabat le bandeau B souple au dos de celui-ci (voir figures 1 et 7 montrant une conformation de l'adaptateur 3 qui est bien adaptée pour que le bandeau B soit fixée à la façon d'une étiquette ou sticker) .

En référence à la figure 1, ce bandeau B se colle par sa face interne F1 sur la face dorsale 6 de l'appareil 4 grâce à l'adhésif de la couche inférieure. A l'état installé, les bornes d'entrée BI et B2 sont agencées dans un même plan, sur la face externe F2 avec un alignement qui peut être sensiblement parallèle à l'axe central X ou direction longitudinale similaire.

En référence à la figure 4, une fois l'adaptateur 3 ainsi installé sur l'appareil 4, l'utilisateur peut le recharger en le posant sur la surface de recharge 5 avec la face d'utilisation (face à écran et/ou à interface utilisateur) vers le haut, ce qui permet de positionner la face externe F2 du bandeau B vers le bas. Les deux bornes d'entrée conductrices Bl, B2 , qui sont ici deux cercles métalliques de petite dimension (entre 0.001 mm et 5 mm par exemple), se posent chacun sur une zone de contact 9 différente. Les zones de contact 9 ont ici la forme d'un carré mais la découpe des éléments 80 peut bien entendu être différente.

En référence à la figure 4, chaque dispositif de support 8 est configuré, en temps normal, de façon à ce que la surface de recharge 5 soit reliée à la masse. Il s'agit typiquement de la masse du circuit qui est elle même reliée à la masse secteur. On peut prévoir un commutateur piloté ou dispositif d'aiguillage analogue, par exemple positionné sur le circuit imprimé du module de contrôle M, qui permet de brancher chaque élément découpé 80 à la tension nécessaire indépendamment des autres éléments 80.

Suivant un intervalle de temps, le commutateur branche brièvement à la tension nominale l'élément 80. La résistance équivalente entre cet élément 80 et la masse est alors mesurée. Si celle-ci correspond à celle de l'appareil 4 prévu alors la tension est toujours envoyée. Une mesure cyclique de la résistance équivalente commence. Lors de la première mesure ou des mesures cycliques après un premier test vérifié, si la résistance équivalente ne correspond plus à celle de l'appareil 4 prévu, alors le commutateur est replacé sur la masse. Cette solution permet de s'assurer que dès que l'on pose un appareil à recharger 4 sur la surface de recharge, la bonne zone de contact 9 d'un élément 80 passe au potentiel haut.

Par défaut le module de contrôle M s'assure que tous les éléments 80 restent au potentiel bas. Seul l'adaptateur 3 installé sur un appareil à recharger 4 peut activer la distribution d'énergie. Les convertisseurs ADC s'occupent de réaliser les mesures, tandis qu'un microcontrôleur ou unité de traitement 15 analogue traite ces mesures et fait le pilotage.

Lorsque le module de contrôle M a repéré la présence de l'ensemble formé par l'adaptateur 3 et l'appareil 4 sur la surface de recharge 5 et identifié les bonnes zones de contact 9, il commande le dispositif d'aiguillage 17 pour délivrer le courant nécessaire à la recharge de l'appareil 4. Seules les deux zones de contact 9 qui sont en contact avec les bornes d'entrée Bl, B2 sont allumées, après une vérification par l'unité de traitement 15 que l'état de ces zones de contact 9 correspond à l'état « prêt à charger ».

Le passage de courant entre les zones de contact 9 de la surface de recharge 5 et les deux bornes d'entrée Bl, B2 conductrices de l'adaptateur 3 se fait par contact, avec un rendement énergétique élevé.

Dans un mode de réalisation, les éléments testeurs qui permettent la détection de l'état de fonctionnement des éléments 80 formant les zones de contact 9 sont configurés pour contrôler périodiquement et très brièvement un tel état. Les éléments testeurs sont par exemple des convertisseurs de signal électrique. On comprend que le module de contrôle M permet de modifier automatiquement l'état des éléments 80 pour éviter toute dépense énergétique inutile et recharger un appareil 4 qui vient d'être posé sur la surface de recharge 5, sans étape d'identification concernant la nature ou des caractéristiques propres de l'appareil 4.

La position relative de la face dorsale 6 des appareils 4 par rapport à la surface de recharge 5 est indifférente pour permettre la recharge, dès lors que les bornes Bl, B2 sont bien positionnées sur une des zones de contact 9.

La distance de séparation D10 entre les zones de contact 9 est ici légèrement supérieure au diamètre DC des portions de surface PSI, PS2 , de façon à éviter que les bornes d'entrée Bl, B2 puissent être en contact avec deux zones de contact 9.

Un des avantages du système de distribution d'électricité 1 est son adaptation à un très grand nombre d'utilisateurs (toute personne possédant au moins un appareil électrique ou électronique nomade 4) et à toute sorte d'environnement (domicile ou dans des lieux publics offrant un accès à la surface de recharge), avec la possibilité de distribuer gratuitement ou commercialiser l'adaptateur de façon indépendante pour l'entreprise ou organisation désirant fournir à des utilisateurs cibles une telle possibilité de recharger leurs appareils nomades 4 dans leurs locaux ou dans des espaces publics. L'espace disponible sur la face externe F2 permet de faire jouer au bandeau B le rôle d'une étiquette, de sorte que l'adaptateur 3 peut servir à faire de la communication visuelle autour d'un logo, d'un texte ou d'autres éléments de communication.

Une fois que l'utilisateur dispose d'un adaptateur 3, il peut utiliser n'importe quelle surface de recharge 5 correspondante pour recharger son appareil électrique ou électronique nomade 4. Parmi les autres avantages, on peut citer :

- la faculté de recharger plusieurs appareils 4 sur la même surface de recharge 5, en fournissant de préférence de l'énergie de manière optimale à partir d'une seule prise électrique 12 ;
- le poids réduit de l'adaptateur 3 qui est typiquement très inférieur à 10 g grâce à la finesse du bandeau B (dont l'épaisseur peut être sensiblement constante à la possible exception de la partie coudée, et par exemple inférieure ou égale à 2 mm) ; et
- le coût énergétique faible du fait d'un contrôle d'alimentation des zones de contact 9 (même efficacité de recharge qu'un chargeur classique, pas de pertes d'énergie lors de la charge et en veille).

Le système 1 peut être incorporé dans des meubles ou des supports adaptés. Le cas échéant, un dispositif de maintien peut être utilisé pour permettre un rechargement d'appareils 4 sur des surfaces de recharge 5 planes penchées ou verticales. L'appareil 4 à recharger est accolé contre la surface de recharge 5 grâce à un élément de maintien en position et/ou grâce à un élément de rappel élastique (par exemple un organe ressort) qui tend à plaquer l'appareil 4 contre la surface de recharge. Le bandeau B peut le cas échéant être relié, par son extrémité opposée à l'organe connecteur 20 ou par une autre partie, à un organe d'accrochage. Selon une option, l'appareil 4 peut être suspendu sur un mur, un meuble, lorsque l'adaptateur 3 est en liaison avec le dispositif de support 8 pour être rechargé et/ou alimenté.

Les appareils à recharger 4 ne se limitent pas aux téléphones et autres appareils de communication nomades. Des appareils de photographie numérique, PDA (Personal Digital Assistant), ordinateurs portables, des casques numériques, des souris sans fil, robots, chargeurs ou jouets disposant de batteries, pourvu qu'ils présentent une surface relativement plane ou surface de support adaptée proche d'un port de recharge, conviennent aussi pour être rechargés par le système de distribution d'électricité 1, à l'aide de l'adaptateur 3 embarqué. On comprend ainsi que la surface de recharge 5 peut convenir pour alimenter et/ou recharger :

- des appareils de petit électroménager équipés de l'adaptateur 3, et
- les « objets » dit « connectés » : montres, bracelets, capteurs, textiles (objets existants et à venir).

Il doit être évident pour les personnes versées dans l'art que la présente invention permet des modes de réalisation sous de nombreuses autres formes spécifiques sans l'éloigner du domaine d'application de l'invention comme revendiqué. Ainsi, le bandeau B ou languette n'est pas nécessairement d'un seul tenant et peut, dans des variantes, se décomposer en plusieurs pièces assemblées entre elles en utilisant tout mode de fixation approprié, l'encliquetage correspondant à une option préférée (mais non limitative) .

La position relative du bandeau B par rapport à l'appareil 4 peut être différente, par exemple en utilisant une partie pliable ou spécifiquement articulée (pouvant optionnellement constituer un pied permettant de poser l'appareil 4 selon un angle de l'ordre de 90° ou moins (par exemple 60°) par rapport à l'horizontale (à la manière d'un cadre photo) .. Une position différente de la position à plat peut ainsi être obtenue, avec l'avantage de favoriser le confort de visionnage de vidéo par exemple.

L'adaptateur 3 peut aussi être prolongé par un étui ou un boîtier remplissant une fonction de rangement d'accessoires, par exemple des oreillettes.

Optionnellement, le bandeau B et/ou l'organe connecteur 20 peuvent être assemblés à un tel contenant. Dans ce cas, le contenant peut par exemple inclure l'organe connecteur 20 et s'étendre à distance des bornes BI, B2, avec un encombrement adapté pour ne pas interférer avec les contacts de recharge entre le bandeau B et la surface de recharge 5.

Bien que les figures illustrent le cas d'une face 6 sensiblement plane pour attacher le bandeau B, on comprend que le bandeau B peut s'accoler différemment le long d'une face de l'appareil 4. Par exemple, la face externe F2 du bandeau B peut être logée, au moins en partie, dans une empreinte formée sur une face de l'appareil 4 à recharger (ce qui peut permettre de border en partie le bandeau B ; dans un tel cas, l'épaisseur du bandeau B ne s'ajoute pas nécessairement à l'épaisseur de l'appareil 4).

## Revendications

1. Système de distribution d'électricité (1) pour permettre de recharger et/ou alimenter, successivement ou simultanément, des appareils électriques ou électroniques nomades (4) pourvus de moyens d'alimentation autonome, le système comprenant :

- un dispositif de support (8) qui présente une surface de recharge (5) sensiblement plane définie essentiellement par :

  ○ une pluralité de zones de contact (9) conductrices distribuées selon deux directions en formant des rangées adjacentes (R1, R2, R3, R4),
  ○ et des espacements (10) d'isolation entre les zones de contact,

- un module de contrôle (M) pour alimenter sélectivement les zones de contact (9) en courant ; et
- au moins un adaptateur (3) à deux bornes d'entrée électriquement conductrices (B1, B2) formant deux portions de surface (PS1, PS2) espacées entre elles d'une distance prédéterminée (c) et adaptées pour coopérer par contact direct de conduction avec deux zones de contact (9) de la surface de recharge (5) ;
l'adaptateur (3) comprend un bandeau (B) incluant les deux bornes d'entrée (B1, B2) et qui présente :

- une face externe (F2) sensiblement plane comprenant ou définissant un revêtement électriquement isolant, les deux portions de surface (PS1, PS2) formant partie de la face externe, la face externe étant dimensionnée et configurée pour que la distance prédéterminée (c) soit au moins trois fois plus grande que la plus grande extension (DC) de n'importe laquelle des deux portions de surface (PS1, PS2) ;
- une face interne (F1) opposée à la face externe (F2) et adaptée pour venir s'attacher contre une face (6) d'un appareil électrique ou électronique nomade (4), de préférence à l'opposé d'un écran d'affichage de l'appareil ; et
- une partie coudée (21) décalée par rapport à la face interne (F1) et reliée électriquement aux deux portions de surface (PS1, PS2).

2. Système de distribution d'électricité selon la revendication 1, dans lequel la face interne (F1) est au moins en partie adhésive et forme une surface d'attache plane, de sorte que le bandeau (B) forme un sticker qui s'étend suivant une direction longitudinale entre la partie coudée (21) et une extrémité distale (40).

3. Système de distribution d'électricité selon la revendication 1 ou 2, comprenant un groupe de plusieurs adaptateurs (3) pourvus chacun d'un bandeau (B) correspondant, de sorte que le système (1) est adapté pour recharger simultanément plusieurs appareils électriques ou électroniques nomades (4) équipés d'un adaptateur (3) respectif dudit groupe.

4. Système de distribution d'électricité selon la revendication 1, 2 ou 3, dans lequel l'adaptateur (3) comprend un organe connecteur (20) pourvu d'une partie insérable (24) de connexion amovible formant une première extrémité de l'organe connecteur et d'une tête (25) qui forme une deuxième extrémité du connecteur opposée à la partie insérable (24), la partie coudée (21) comprenant une surface de connexion (220) permettant de relier électriquement la tête (25) de l'organe connecteur (20) au bandeau (B).

5. Système de distribution d'électricité selon la revendication 3 et la revendication 4, dans lequel le bandeau (B) est allongé et présente une longueur (L2) au moins deux fois supérieure à sa plus grande largeur, le bandeau (B) permettant d'éloigner longitudinalement et radialement la surface de connexion (220) par rapport à la surface d'attache plane, au moins dans un état installé de l'adaptateur (3) sur un appareil à recharger (4).

6. Système de distribution d'électricité selon l'une quelconque des revendications 1 à 5, dans lequel les zones de contact (9) d'une rangée déterminée choisie parmi lesdites rangées (R1, R2, R3, R4) présentent chacune un même périmètre qui est supérieur à une longueur (L3) d'un ensemble formé par trois zones de contact (9) successives qui appartiennent à la rangée déterminée, la distance prédéterminée (c) ayant une longueur dépassant le quart dudit périmètre et qui de préférence est suffisamment grande pour que les deux bornes d'entrée (B1, B2) ne puissent pas être localisées sur une même zone de contact (9) de la surface de recharge (5).

7. Système de distribution d'électricité selon la revendication 6, dans lequel la distance prédéterminée (c) est inférieure à la moitié dudit périmètre.

8. Système de distribution d'électricité selon l'une quelconque des revendications 1 à 7, **caractérisé en ce que** dans plusieurs desdites rangées (R1, R2, R3, R4) :
les zones de contact (9) ont un même format sensiblement carré ou hexagonal, avec un même côté (a), de façon à définir chacune une même surface.

9. Système de distribution d'électricité selon la revendication 8, dans lequel les deux portions de surface (PS1, PS2), qui sont de préférence de même forme externe et de mêmes dimensions, sont chacune plus petite et d'un autre ordre de grandeur que la surface définie par les zones de contact (9).

10. Système de distribution d'électricité selon la revendication 8 ou 9, dans lequel le format des zones de contact (9) est carré dans au moins une des rangées (R1, R2, R3, R4) et la distance prédéterminée (c) qui sépare les deux bornes d'entrée (B1, B2) satisfait de préférence la relation suivante par rapport au côté (a) des zones de contact (9) :

$$1{,}42 \leq c/a \leq 2{,}10.$$

11. Système de distribution d'électricité selon l'une quelconque des revendications 1 à 10, dans lequel les zones de contact (9) sont agencées en quinconce et/ou comprennent au moins deux types distincts de format.

12. Adaptateur (3) pour appareils électriques ou électroniques nomades (4), pourvu de deux bornes d'entrée électriquement conductrices (B1, B2) formant deux portions de surface (PS1, PS2) espacées entre elles d'une distance prédéterminée (c) et adaptées pour coopérer par contact direct de conduction avec une surface de recharge (5), dans lequel il définit ledit adaptateur du système de distribution d'électricité (10) tel que défini dans les revendications précédentes, en comprenant un bandeau (B) qui inclut les deux bornes d'entrée (B1, B2) et qui présente :

- une face externe (F2) sensiblement plane comprenant ou définissant un revêtement électriquement isolant, les deux portions de surface (PS1, PS2) formant partie de la face externe, la face externe (F2) étant dimensionnée et configurée pour que la distance prédéterminée (c) soit au moins trois fois plus grande que la plus grande extension (DC) de n'importe laquelle des deux portions de surface (PS1, PS2) ;
- une face interne (F1) opposée à la face externe (F2) et adaptée pour venir s'attacher contre une face (6) d'un appareil électrique ou électronique nomade (4), de préférence à l'opposé d'un écran d'affichage de l'appareil ; et

- une partie coudée (21) décalée par rapport à la face interne (F1) et reliée électriquement aux deux portions de surface (PS1, PS2).

13. Adaptateur selon la revendication 12, comprenant un organe connecteur (20) pourvu d'une tête rigide (25) et qui présente une partie insérable (24) de connexion amovible distincte de ladite tête (25), la partie coudée (21) étant raccordée à la tête (25) de l'organe connecteur (20) et présentant une portion d'ajustement en position délimitée entre une première ligne de pliage (31) du bandeau proximale par rapport à l'organe connecteur (20) et une deuxième ligne de pliage (32) du bandeau distale par rapport à l'organe connecteur (20).

14. Adaptateur selon la revendication 12 ou 13, dans lequel la partie coudée (21) du bandeau (B) présente des moyens d'attache pour fixer de manière amovible le bandeau (B) à l'organe connecteur (20), sélectivement selon une première configuration ou une deuxième configuration distincte de la première configuration.

15. Procédé de distribution d'électricité pour recharger et/ou alimenter, successivement ou simultanément, plusieurs appareils électriques ou électroniques nomades (4) pourvus de moyens d'alimentation autonome, en utilisant une surface de recharge (5) sensiblement plane qui présente une pluralité de zones de contact (9) conductrices distribuées selon deux directions en formant des rangées adjacentes (R1, R2, R3, R4), le procédé comprend pour chaque appareil (4) à recharger les étapes consistant essentiellement à :

- connecter un adaptateur (3) à un port de recharge de l'appareil (4) par l'intermédiaire d'un organe connecteur (20) à connexion amovible, de préférence du côté d'une tranche de l'appareil, l'adaptateur (3) comprenant un bandeau (B) qui prolonge l'organe connecteur (20) et qui est pourvu sur une face externe (F2) de deux bornes d'entrée électriquement conductrices (B1, B2) formant deux portions de surface (PS1, PS2) ;
- accoler et attacher, dans une zone d'attache, une face interne (F1) du bandeau opposée à la face externe (F2) contre une face (6) de l'appareil, en maintenant l'organe connecteur (20) écarté de la zone d'attache et dans un état de liaison électrique à une partie (21) du bandeau qui est coudée ;
- placer l'adaptateur (3) entre l'appareil (4) et la surface de recharge (5) en mettant en contact direct de conduction les deux portions de surface (PS1, PS2) sur des zones de contact (9) distinctes de la surface de recharge (5), sachant que les deux portions de surface (PS1, PS2) sont espacées entre elles d'une distance prédéterminée (c) au moins trois fois plus grande que la plus grande extension (DC) de n'importe laquelle des deux portions de surface (PS1, PS2) ; et

- alimenter sélectivement des zones de contact (9) en courant, de sorte que les deux zones de contact sur lesquelles s'appuient les deux portions de surface (PS1, PS2) sont dans un état fonctionnel et permettent la recharge via l'adaptateur (3).

**Patentansprüche**

1. Stromverteilungssystem (1), welches dazu dient, gleichzeitig oder nacheinander ortsungebundene elektrische oder elektronische Geräte (4) aufzuladen und/oder zu versorgen, welche mit eigenständigen Versorgungsmitteln versehen sind, wobei das System Folgendes beinhaltet:

- eine Stützvorrichtung (8), welche eine im Wesentlichen ebene Ladefläche (5) aufweist, welche hauptsächlich durch Folgendes definiert ist:

   ◦ eine Vielzahl von leitenden Kontaktbereichen (9), welche in zwei Richtungen verteilt sind, indem sie aneinandergrenzende Reihen (R1, R2, R3, R4) bilden,
   ◦ und Isolationsabstände (10) zwischen den Kontaktbereichen,

- ein Steuermodul (M) zum selektiven Versorgen der Kontaktbereiche (9) mit Strom; und
- mindestens einen Adapter (3) mit zwei elektrisch leitenden Eingangsanschlüssen (B1, B2), welche zwei Flächenabschnitte (PS1, PS2) bilden, welche voneinander um einen vorbestimmten Abstand (c) entfernt und geeignet sind, um durch direkten Leitkontakt mit zwei Kontaktbereichen (9) der Ladefläche (5) zusammenzuarbeiten;

der Adapter (3) ein Band (B) beinhaltet, welches die beiden Eingangsanschlüsse (B1, B2) umfasst und welches Folgendes aufweist:

- eine im Wesentlichen ebene äußere Seite (F2), welche eine elektrisch isolierende Beschichtung beinhaltet oder definiert, wobei die beiden Flächenabschnitte (PS1, PS2) einen Teil der äußeren Seite bilden, wobei die äußere Seite dimensioniert und konfiguriert ist, damit der vorbestimmte Abstand (c) mindestens dreimal größer ist als die größte Erstreckung (DC) eines beliebigen der beiden Flächenabschnitte (PS1, PS2);

- eine innere Seite (F1), welche der äußeren Seite (F2) abgewandt und geeignet ist, sich an einer Fläche (6) eines ortsungebundenen elektrischen oder elektronischen Gerätes (4) zu befestigen, vorzugsweise auf der gegenüberliegenden Seite eines Anzeigebildschirms des Gerätes; und

- einen gekröpften Teil (21), welcher in Bezug auf die innere Seite (F1) versetzt und elektrisch mit den beiden Flächenabschnitten (PS1, PS2) verbunden ist.

2. Stromverteilungssystem nach Anspruch 1, bei welchem die innere Seite (F1) mindestens teilweise haftet und eine ebene Befestigungsfläche bildet, so dass das Band (B) einen Aufkleber bildet, welcher sich in eine Längsrichtung zwischen dem gekröpften Teil (21) und einem distalen Ende (40) erstreckt.

3. Stromverteilungssystem nach Anspruch 1 oder 2, beinhaltend eine Gruppe mehrerer Adapter (3), welche jeweils mit einem entsprechenden Band (B) versehen sind, sodass das System (1) geeignet ist, mehrere ortsungebundene elektrische oder elektronische Geräte (4), welche mit einem jeweiligen Adapter (3) der Gruppe versehen sind, gleichzeitig aufzuladen.

4. Stromverteilungssystem nach Anspruch 1, 2 oder 3, bei welchem der Adapter (3) ein Anschlussorgan (20) besitzt, welches mit einem abnehmbaren, einsteckbaren Anschlussteil (24) versehen ist, welches ein erstes Ende des Anschlussorgans bildet und mit einem Kopf (25), welcher ein zweites Ende des Steckers bildet, welcher dem einsteckbaren Teil (24) abgewandt ist, wobei der gekröpfte Teil (21) eine Anschlussfläche (220) beinhaltet, welche es ermöglicht, den Kopf (25) des Anschlussorgans (20) elektrisch mit dem Band (B) zu verbinden.

5. Stromverteilungssystem nach Anspruch 3 und Anspruch 4, bei welchem das Band (B) verlängert ist und eine Länge (L2) aufweist, welche mindestens zweimal größer als seine größte Breite ist, wobei das Band (B) es ermöglicht, die Anschlussfläche (220) in Längs- und Radialrichtung in Bezug auf die ebene Befestigungsfläche, zumindest in einem installierten Zustand des Adapters (3) an einem aufzuladenden Gerät (4), zu entfernen.

6. Stromverteilungssystem nach einem der Ansprüche 1 bis 5, bei welchem die Kontaktbereiche (9) einer bestimmten Reihe, welche unter den Reihen (R1, R2, R3, R4) ausgewählt wird, jeweils einen gleichen Umfang aufweisen, welcher länger als eine Länge (L3) einer aus drei aufeinanderfolgenden Kontaktbereichen (9) gebildeten Gruppe ist, welche der bestimmten Reihe angehören, wobei der vorbestimmte Abstand (c) eine Länge besitzt, welche ein Viertel des Umfangs überschreitet und vorzugsweise groß genug ist, damit die beiden Eingangsanschlüsse (B1, B2) nicht in einem gleichen Kontaktbereich (9) der Ladefläche (5) lokalisiert sein können.

7. Stromverteilungssystem nach Anspruch 6, bei welchem der vorbestimmte Abstand (c) kleiner als die Hälfte des Umfangs ist.

8. Stromverteilungssystem nach einem der Ansprüche 1 bis 7, **dadurch gekennzeichnet, dass** in mehreren der Reihen (R1, R2, R3, R4):
die Kontaktbereiche (9) ein gleiches Format besitzen, welches im Wesentlichen quadratisch oder sechseckig ist, mit einer gleichen Seite (a), sodass ein jeder eine gleiche Fläche definiert.

9. Stromverteilungssystem nach Anspruch 8, bei welchem die zwei Flächenabschnitte (PS1, PS2), welche vorzugsweise die gleiche äußere Form und die gleichen Abmessungen besitzen, jeweils kleiner sind als die durch die Kontaktbereiche (9) definierte Fläche und eine andere Größenordnung als diese aufweisen.

10. Stromverteilungssystem nach Anspruch 8 oder 9, bei welchem das Format der Kontaktbereiche (9) in mindestens einer der Reihen (R1, R2, R3, R4) quadratisch ist und der vorbestimmte Abstand (c), welcher die beiden Eingangsanschlüsse (B1, B2) trennt, vorzugsweise folgende Beziehung in Bezug auf die Seitenlänge (a) der Kontaktbereiche (9) erfüllt:

$$1,42 \leq c/a \leq 2,10.$$

11. Stromverteilungssystem nach einem der Ansprüche 1 bis 10, bei welchem die Kontaktbereiche (9) im Zickzack angeordnet sind und/oder mindestens zwei unterschiedliche Formatarten beinhalten.

12. Adapter (3) für ortsungebundene elektrische oder elektronische Geräte (4), versehen mit zwei elektrisch leitenden Eingangsanschlüssen (B1, B2), welche zwei durch einen vorbestimmten Abstand (c) dazwischen voneinander entfernte Flächenabschnitte (PS1, PS2) bilden und geeignet sind, um durch direkten Leitkontakt mit einer Ladefläche (5) zusammenzuarbeiten, wobei er den Adapter des Stromversorgungssystems (10) nach den vorhergehenden Ansprüchen definiert, indem er ein Band (B) beinhaltet, welches die beiden Eingangsanschlüsse (Bi, B2) umfasst und Folgendes aufweist:

- eine im Wesentlichen ebene äußere Seite (F2), welche eine elektrisch isolierende Beschichtung beinhaltet oder definiert, wobei die beiden Flächenabschnitte (PS1, PS2) einen Teil der äußeren Seite (F2) bilden, wobei die äußere Seite dimensioniert und konfiguriert ist, damit der vorbestimmte Abstand (c) mindestens dreimal größer ist als die größte Erstreckung (DC) eines beliebigen der beiden Flächenabschnitte (PS1, PS2);

- eine innere Seite (F1), welche der äußeren Seite (F2) abgewandt und geeignet ist, sich an einer Fläche (6) eines ortsungebundenen elektrischen oder elektronischen Gerätes (4) zu befestigen, vorzugsweise auf der gegenüberliegenden Seite eines Anzeigebildschirms des Gerätes; und

- einen gekröpften Teil (21), welcher in Bezug auf die innere Seite (F1) versetzt und elektrisch mit den beiden Flächenabschnitten (PS1, PS2) verbunden ist.

13. Adapter nach Anspruch 12, beinhaltend ein Anschlussorgan (20), welches mit einem starren Kopf (25) versehen ist und welches einen abnehmbaren, einsteckbaren Anschlussteil (24) aufweist, welcher sich von dem Kopf (25) unterscheidet, wobei der gekröpfte Teil (21) an dem Kopf (25) des Anschlussorgans (20) angeschlossen ist und eine Einstellposition in einer Position aufweist, welche zwischen einer ersten Falzlinie (31) des Bandes, welche sich proximal in Bezug auf das Anschlussorgan (20) befindet und einer zweiten Falzlinie (32) des Bandes, welche sich distal in Bezug auf das Anschlussorgan (20) befindet, abgegrenzt ist.

14. Adapter nach Anspruch 12 oder 13, bei welchem der gekröpfte Teil (21) des Bandes (B) Befestigungsmittel zum abnehmbaren Befestigen des Bandes (B) am Anschlussorgan (20) aufweist, selektiv gemäß einer ersten Konfiguration oder einer zweiten Konfiguration, welche sich von der ersten Konfiguration unterscheidet.

15. Verfahren zur Stromverteilung zum Aufladen und/Versorgen, gleichzeitig oder nacheinander, mehrerer ortsungebundener elektrischer oder elektronischer Geräte (4), welche mit eigenständigen Versorgungsmitteln versehen sind, unter Verwendung einer im Wesentlichen ebenen Ladefläche (5), welche eine Vielzahl von leitenden Kontaktbereichen (9) aufweist, welche in zwei Richtungen verteilt sind und aneinandergrenzende Reihen (R1, R2, R3, R4) bilden, wobei das Verfahren für jedes aufzuladende Gerät (4) die Schritte beinhaltet, welche im Wesentlichen darin bestehen:

- einen Adapter (3) an einem Aufladeanschluss des Gerätes (4) über ein Anschlussorgan (20) mit abnehmbaren Anschluss anzuschließen, vorzugsweise auf der Seite einer Kante des Gerätes, wobei der Adapter (3) ein Band (B) beinhaltet, welches das Anschlussorgan (20) verlängert und auf einer äußeren Seite (F2) mit zwei elektrisch leitenden Eingangsanschlüssen (B1, B2) versehen ist, welche zwei Flächenabschnitte (PS1, PS2) bilden;

- in einem Befestigungsbereich, eine innere Seite (F1) des Bandes, welche der äußeren Seite (F2) abgewandt ist, an einer Seite (6) des Gerätes anzuhaften und zu befestigen, in dem man das Anschlussorgan (20) von dem Befestigungsbereich entfernt und in einem Zustand der elektrischen Verbindung mit einem Teil (21) des Bandes hält, welcher gekröpft ist;

- den Adapter (3) zwischen dem Gerät (4) und der Ladefläche (5) zu platzieren, indem man die beiden Flächenabschnitte (PS1, PS2) an unterschiedlichen Kontaktbereichen (9) der Ladefläche (5) in direkten Leitkontakt bringt, wobei die beiden Flächenabschnitte (PS1, PS2) voneinander um einen vorbestimmten Abstand (c) entfernt sind, welcher mindestens dreimal größer als die größte Erstreckung (DC) eines beliebigen der beiden Flächenabschnitte (PS1, PS2) ist; und

- selektiv Kontaktbereiche (9) mit Strom zu versorgen, so dass die beiden Kontaktbereiche, an welche sich die beiden Flächenabschnitte (PS1, PS2) stützen, in einem Funktionszustand stehen und die Aufladung über den Adapter (3) ermöglichen.

**Claims**

1. An electricity distribution system (1) for successively or simultaneously allowing recharging and/or powering of nomadic electrical or electronic devices (4) provided with autonomous power supply means, the system comprising:

     - a support device (8) that has a substantially flat recharging surface (5) that is basically defined by:

         ◦ a plurality of conductive contact zones (9) distributed in two directions by forming adjacent rows (R1, R2, R3, R4);
         ◦ and isolation spaces (10) between the contact zones;

     - a control module (M) for selectively supplying the contact zones (9) with current; and
     - at least one adaptor (3) with two electrically conductive input terminals (B1, B2) forming two surface portions (PS1, PS2) spaced apart by a predetermined distance (c) and adapted to engage through direct conduction contact with two contact zones (9) of the recharging surface (5);

the adaptor (3) comprises a strip (B), which includes the two input terminals (B1, B2) and which has:

- a substantially flat outer face (F2) comprising or defining an electrically isolating coating, the two surface portions (PS1, PS2) forming part of the outer face, the outer face being designed and configured so that the predetermined distance (c) is at least three times greater than the greatest extension (DC) of any of the two surface portions (PS1, PS2);
- an inner face (F1) opposite the outer face (F2) and adapted to be attached against a face (6) of a nomadic electrical or electronic device (4), preferably opposite a display screen of the device; and
- a curved part (21) offset relative to the inner face (F1) and electrically connected to the two surface portions (PS1, PS2).

2. The electricity distribution system as claimed in claim 1, wherein the inner face (F1) is at least partly adhesive and forms a flat attachment surface, so that the strip (B) forms a sticker that extends in a longitudinal direction between the curved part (21) and a distal end (40).

3. The electricity distribution system as claimed in claim 1 or 2, comprising a group of a plurality of adaptors (3) each provided with a corresponding strip (B), so that the system (1) is adapted to simultaneously recharge a plurality of nomadic electrical or electronic devices (4) equipped with a respective adaptor (3) of said group.

4. The electricity distribution system as claimed in claim 1, 2 or 3, wherein the adaptor (3) comprises a connector component (20) provided with an insertable detachable connection part (24) forming a first end of the connection component and a head (25), which forms a second end of the connector opposite the insertable part (24), the curved part (21) comprising a connection surface (220) allowing the head (25) of the connector component (20) to be electrically connected to the strip (B).

5. The electricity distribution system as claimed in claim 3 and claim 4, wherein the strip (B) is elongated and the length (L2) thereof is at least two times greater than its greatest width, the strip (B) allowing the connection surface (220) to be longitudinally and radially separated from the flat attachment surface, at least in a state whereby the adaptor (3) is installed on a device (4) to be recharged.

6. The electricity distribution system as claimed in any one of claims 1 to 5, wherein the contact zones (9) of a determined row selected from said rows (R1, R2, R3, R4) each have the same perimeter, which is greater than a length (L3) of an assembly formed by three successive contact zones (9) that belong to the determined row, the predetermined distance (c) having a length that exceeds a quarter of said perimeter and that preferably is large enough so that the two input terminals (B1, B2) cannot be located on the same contact zone (9) of the recharging surface (5).

7. The electricity distribution system as claimed in claim 6, wherein the predetermined distance (c) is less than half of said perimeter.

8. The electricity distribution system as claimed in any one of claims 1 to 7, **characterised in that** in a plurality of said rows (R1, R2, R3, R4):
the contact zones (9) have the same substantially square or hexagonal format, with the same side (a), so as to each define the same surface.

9. The electricity distribution system as claimed in claim 8, wherein the two surface portions (PS1, PS2), which preferably have the same external shape and the same dimensions, are each smaller and have another order of magnitude than the surface defined by the contact zones (9).

10. The electricity distribution system as claimed in claim 8 or 9, wherein the format of the contact zones (9) is square in at least one of the rows (R1, R2, R3, R4) and the predetermined distance (c) that separates the two input terminals (B1, B2) preferably complies with the following relation with respect to the side (a) of the contact zones (9):

$$1.42 \leq c/a \leq 2.10.$$

11. The electricity distribution system as claimed in any one of claims 1 to 10, wherein the contact zones (9) are arranged staggered and/or comprise at least two distinct types of format.

12. An adaptor (3) for nomadic electrical or electronic devices (4), provided with two electrically conductive input terminals (B1, B2) forming two surface portions (PS1, PS2) spaced apart by a predetermined distance (c) and adapted to engage through direct conduction contact with a recharging surface (5), wherein it defines said adaptor of the electricity distribution system (10) as defined in the preceding claims, by comprising a strip (B), which includes the two input terminals (B1, B2) and which has:

> - a substantially flat outer face (F2) comprising or defining an electrically isolating coating, the two surface portions (PS1, PS2) forming part of the outer face, the outer face (F2) being designed and configured so that the predetermined distance (c) is at least three times greater than the greatest extension (DC) of any of the two surface portions (PS1, PS2);
> - an inner face (F1) opposite the outer face (F2) and adapted to be attached against a face (6) of a nomadic electrical or electronic device (4), preferably opposite a display screen of the device; and
> - a curved part (21) offset relative to the inner face (F1) and electrically connected to the two surface portions (PS1, PS2).

13. The adaptor as claimed in claim 12, comprising a connector component (20) provided with a rigid head (25) and having an insertable detachable connection part (24) distinct from said head (25), the curved part (21) being connected to the head (25) of the connector component (20) and having a position adjustment portion defined between a first fold line (31) of the proximal strip relative to the connector component (20) and a second fold line (32) of the distal strip relative to the connector component (20).

14. The adaptor as claimed in claim 12 or 13, wherein the curved part (21) of the strip (B) has attachment means for detachably fastening the strip (B) to the connector component (20), selectively in a first configuration or in a second configuration distinct from the first configuration.

15. A method for distributing electricity for successively or simultaneously recharging and/or powering a plurality of nomadic electrical or electronic devices (4) provided with autonomous power supply means, using a substantially flat recharging surface (5) that has a plurality of conductive contact zones (9) distributed in two directions by forming adjacent rows (R1, R2, R3, R4), the method comprises, for each device (4) to be recharged, the following steps, which basically involve:

> - connecting an adaptor (3) to a recharging port of the device (4) by means of a detachable connection connector component (20), preferably on the side of an edge of the device, the adaptor (3) comprising a strip (B), which extends the connector component (20) and which is provided on an outer face (F2) with two electrically conductive input terminals (B1, B2) forming two surface portions (PS1, PS2);
> - adhering and attaching, in an attachment zone, an inner face (F1) of the strip opposite the outer face (F2) against a face (6) of the device, while keeping the connector component (20) spaced apart from the attachment zone and in a state of electrical connection to a curved part (21) of the strip;

- placing the adaptor (3) between the device (4) and the recharging surface (5) by placing the two surface portions (PS1, PS2) in direct conduction contact on distinct contact zones (9) of the recharging surface (5), knowing that the two surface portions (PS1, PS2) are spaced apart from each other by a predetermined distance (c) that is at least three times greater than the greatest extension (DC) of any of the two surface portions (PS1, PS2); and

- selectively supplying the contact zones (9) with current, so that the two contact zones on which the two surface portions (PS1, PS2) are pressed are in an operational state and allow recharging via the adaptor (3).

**FIG. 1**

**FIG. 2**

FIG. 3A

FIG. 3B

FIG. 4

FIG. 5

FIG. 6

FIG. 7

**EP 3 350 900 B1**

## RÉFÉRENCES CITÉES DANS LA DESCRIPTION

**Documents brevets cités dans la description**

- WO 2005060401 A
- US 2010022285 A1
- US 7392068 B2
- WO 03075415 A1